# FASCICULE DE BREVET EUROPEEN

(11) **EP 0 965 457 B1**
(45) Date de publication et mention de la délivrance du brevet: **02.03.2005**
(21) Numéro de dépôt: 99401478.5
(22) Date de dépôt: 16.06.1999
(51) Int. Cl.: B41J 2/47, H04N 1/50, G02B 26/12

(54) **Imprimante couleur à source optique commune pour plusieurs couleurs**
Farbdrucker mit einer gemeinschaftlichen optischen Quelle für mehrere Farben
Colour printer with a common optical source for several colours

(30) Priorité: 16.06.1998 FR 9807564
(43) Date de publication de la demande: 22.12.1999
(73) Titulaire: SAGEM SA, 75116 Paris (FR)
(72) Inventeur: Nauche, Gilles, 92400 Courbevoie (FR)
(74) Mandataire: Bloch, Gérard

(56) Documents cités:
- US-A- 5 007 692
- US-A- 5 585 912

## Description

La présente invention concerne les imprimantes couleur. Pour imprimer une image en couleurs, il existe des imprimantes, qualifiées de tandem, dans lesquelles on imprime successivement trois couleurs et le noir dans quatre ensembles d'impression monochrome disposés en série. Chaque ensemble constitue à lui seul une imprimante ne différant des autres que par la couleur des pigments d'impression utilisés. On notera que par couleur, on entend aussi le noir et le blanc.

Chaque ensemble d'impression comporte un rouleau d'impression électrostatique qui est initialement chargé électriquement par passage de ses génératrices successives devant un dispositif de charge. Une tête laser, associée à un dispositif de balayage d'une ligne génératrice du rouleau, en aval du dispositif de charge, décharge les segments de ligne devant rester vierges dans la ligne pour former une image latente. Le rouleau poursuivant sa rotation, les génératrices balayées entrent en contact avec des particules de pigments, ou toner, contenues dans une cartouche, et les particules sont attirées par les zones du rouleau ayant conservé leur charge. L'image latente est ainsi révélée. La zone du tambour la portant parvient finalement à un contre-rouleau qui presse une feuille à imprimer sur le tambour, entraînée devant celui-ci, pour transférer ainsi le toner qui est enfin fixé à la feuille par cuisson dans un four. Voir US 5,585,912

La présente invention vise à limiter le coût de la multiplicité des ensembles d'impression.

A cet effet, l'invention concerne une imprimante couleur comportant une pluralité d'ensembles d'impression d'une pluralité de couleurs, disposés en série dans une chaîne d'impression d'un support d'impression et comportant, chacun, un tambour électrostatique d'impression agencé pour fixer des pigments d'une couleur spécifique selon une image formée par balayage d'un faisceau optique modulé par des données d'image et transférée au support d'impression, imprimante caractérisée par le fait qu'elle comporte une source de faisceau optique unique commune à tous les ensembles d'impression et des moyens de commutation agencés pour pour commuter la source sur les différents tambours.

L'invention sera mieux comprise à l'aide de la description suivante de plusieurs formes de réalisation de l'imprimante de l'invention, en référence au dessin annexé, sur lequel :
- la figure 1 est une vue latérale schématique de la forme de réalisation préférée de l'imprimante;
- la figure 2 représente le déflecteur optique mobile linéairement d'une deuxième forme de réalisation;
- la figure 3 représente le déflecteur optique mobile linéairement d'une troisième forme de réalisation; et
- la figure 4 représente le déflecteur optique rotatif d'une quatrième forme de réalisation de l'imprimante.

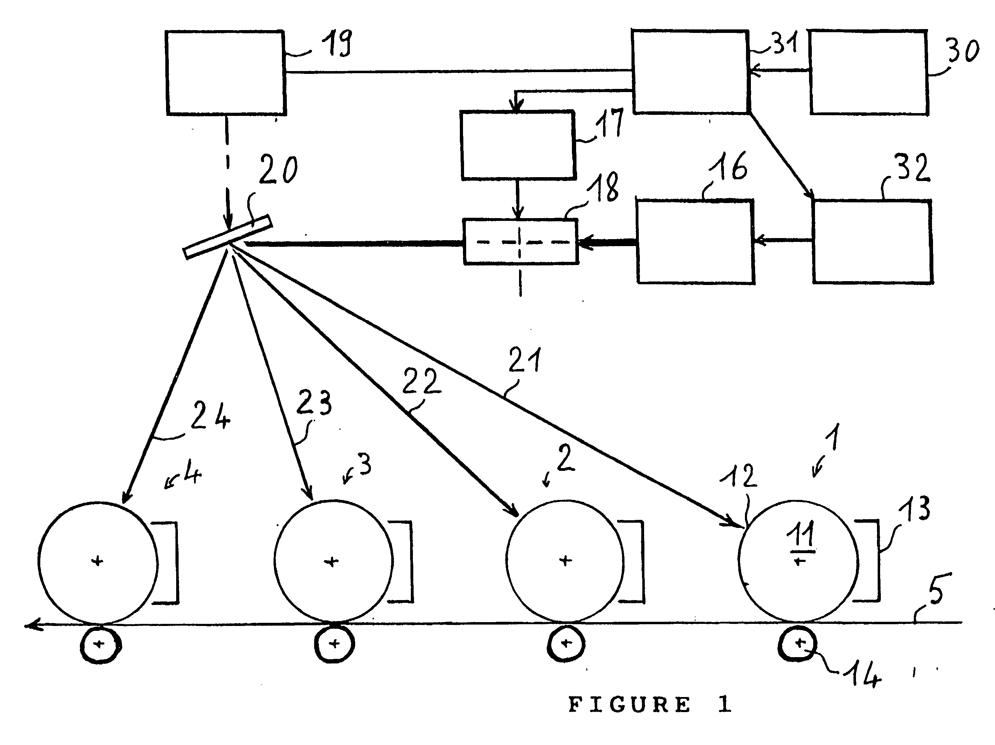

L'imprimante de la figure 1 comporte une chaîne de quatre ensembles d'impression 1, 2, 3, 4 disposés dans cet ordre sur le trajet 5, ici orienté vers la gauche, d'impression de feuilles de papier.

Les ensembles 1 à 4, tous mécaniquement semblables, servent chacun à l'impression d'une image en noir, cyan, magenta, jaune respectivement, pour former par superposition sur image polychrome.

L'ensemble 1 comporte un tambour électrostatique 11 tournant dans le sens des aiguilles d'une montre et pouvant être chargé électrostatiquement en surface, par un rouleau non représenté. Angulairement en aval, est située une position fixe 12 pour une génératrice du tambour 11 balayée par un faisceau lumineux ponctuel 21. A ce niveau, le faisceau lumineux 21, commandé par les données d'image à imprimer, décharge des segments de ligne, selon l'image.

Angulairement en aval se trouve un réservoir 13 d'encre en poudre, ou pigment, au niveau duquel les zones du tambour 11 non déchargées électriquement par le faisceau 21 vont attirer les particules de pigment et révéler l'image latente en une image réelle qui est ensuite transférée par placage sur une feuille défilant, sur le trajet 5, entre le tambour 11 et un rouleau 14 formant laminoir avec celui-ci. Le four de cuisson du pigment n'a pas été représenté.

Au niveau global de la commande des quatre ensembles 1 à 4, une base de temps 30 commande le séquencement d'une unité centrale à microprocesseur 31 qui lit séquentiellement, dans une mémoire 32, quatre blocs de données d'image relatives aux quatre couleurs ci-dessus.

Chaque bloc de données commande séquentiellement une source 16 de faisceau lumineux, précisément une source laser. Celle-ci illumine un séparateur spatial de faisceau 20, ou aiguilleur, permettant d'aiguiller le faisceau issu de la source 16 vers successivement les quatre positions des génératrices (12) des quatre ensembles 1 à 4 pour y former les quatre images de couleur spécifique.

Dans la forme de réalisation représentée, l'aiguilleur 20 est un miroir monté rotatif autour d'un axe perpendiculaire au plan de la figure 1 et pouvant occuper quatre positions prédéterminées sous l'action d'un actionneur 19 commandé par l'unité centrale 31 en phase avec la lecture des blocs en mémoire 32, c'est-à-dire faisant pivoter le miroir 20 vers une nouvelle position lorsque la lecture en mémoire 32 passe d'un bloc à l'autre.

L'actionneur 19 est ici un moteur pas à pas recevant un nombre déterminé d'impulsions d'avance pour passer d'une position à l'autre. Les pas sont de taille angulaire suffisamment faible pour que la précision angulaire de la position du miroir 20 soit suffisante pour éviter toute dérive de la position des génératrices visées, comme 12. De façon à éviter une discontinuité angulaire trop importante à la fin d'un cycle de balayage des quatre ensembles 1 à 4, le miroir tournant 20 peut comporter deux miroirs dos à dos ou même être constitué d'un support rotatif avec une pluralité de secteurs angulaires portant chacun un miroir d'orientation spécifique dans un plan perpendiculaire à celui de la figure 1.

Le balayage ligne des génératrices, dans un plan perpendiculaire à la figure 1, est effectué par un miroir à rotation continue 18, représenté très schématiquement sur le trajet du faisceau issu de la source 16 (supposé rester en ligne), miroir 18 entraîné par un moteur électrique 17 commandé par l'unité centrale 31, en synchronisme avec le rythme de lecture des bits de la mémoire 32.

La source 16 comporte, de façon classique, une optique de focalisation, non représentée, destinée à compenser sa divergence et, de même, les faisceaux 21 à 24 traversent chacun une barette optique spécifique, non représentée, pour faire converger en un point le faisceau considéré, ceci tout au long de la génératrice (12) et pour corriger l'accélération du balayage linéaire en extrémités de génératrice 12, due à la rotation à vitesse fixe du miroir 18. Une correction peut aussi intervenir au niveau de la source 16, pour réguler sa puissance selon la position du faisceau 21-24 sur la génératrice 12 considérée.

Un réglage de la taille des points à imprimer (modulation de largeur d'impulsion PWM) peut aussi intervenir au niveau de la commande de la source 16, par logiciel, pour régler la largeur totale de l'image et assurer une constance d'espacement entre points d'une ligne (correction en 1/cos²θ) ou entre lignes, ce réglage variant selon la distance entre chaque ensemble 1 à 4 et l'aiguilleur 20.

Afin d'avoir des conditions optiques identiques pour les quatre ensembles 1 à 4, il peut être prévu de les disposer (leurs génératrices 12) selon un axe de cercle centré sur l'aiguilleur 20. La piste 5 est donc alors elle-même sensiblement circulaire.

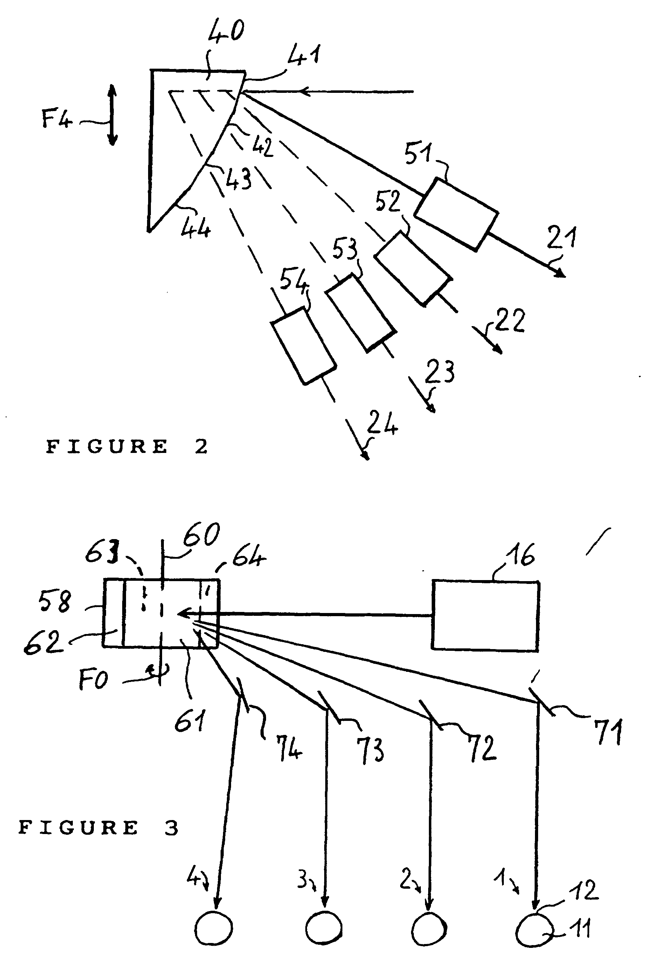

La figure 2 représente une variante 40 de l'aiguilleur 20, dans laquelle il se déplace en translation (flèche F4), perpendiculaire au faisceau incident provenant de la source 16, pour présenter à celui-ci une face parmi quatre 41, 42, 43, 44, d'inclinaisons différentes, pour atteindre (21-24) par chacune l'un des ensembles 1 à 4. L'aiguilleur 40 est dans une position d'émission, sur la figure 2, du faisceau 21; les lignes en pointillés illustrent les trois autres positions de l'aiguilleur 40 et des rayons réfléchis correspondants.

En variante, il peut être prévu de remplacer l'aiguilleur rotatif 20 par un aiguilleur statique ayant par exemple la forme de l'aiguilleur 40 mais dont les quatre faces 41 à 44 seraient alors simultanément illuminées et émettraient donc les quatre faisceaux 21 à 24. Quatre caches optiques commandables 51 à 54, disposés respectivement sur les trajets des faisceaux 21 à 24, permettent alors de commander simultanément l'impression de quatre images depuis les blocs de données en mémoire 32. La source 16 émet alors de façon continue.

Comme les quatre ensembles 1 à 4 sont distants les uns des autres, les quatre images peuvent en fait concerner quatre feuilles de papier distinctes, une couleur de l'une étant imprimée alors que se déroule simultanément l'impression d'une autre couleur pour la suivante. Ainsi, au multiplexage spatial correspond un multiplage temporel des impressions.

La variante de réalisation de la figure 3 diffère de celle de la figure 1 par le fait que les déflecteurs 18 et 20 sont remplacés par un déflecteur 58 à rotation continue, effectuant le balayage successif des quatre génératrices comme 12.

La source 16 illumine le bloc déflecteur ligne rotatif 58 d'axe 60, homologue du déflecteur 18, par un faisceau, ici radial par rapport à l'axe de rotation 60. Le déflecteur 58 comporte au moins une face réflectrice et de préférence au moins deux faces opposées, pour réfléchir en permanence tout faisceau. Il a ici une section radiale sensiblement carrée, limitée par quatre faces formant miroirs latéraux, ici parallèles à l'axe de rotation 60.

Lors de la rotation (F0) du bloc déflecteur 58, le faisceau issu de la source 16 balaye ainsi un large secteur dans le plan radial considéré, selon la flèche F1.

En variante, la source 16 peut illuminer le bloc 58 sous un angle autre que selon la direction radiale, par exemple parallèlement à l'axe 60, et les quatre faces du bloc 58 sont alors inclinées sur l'axe 60 pour renvoyer radialement, donc dans un plan, le faisceau qui les atteint.

Comme les quatre rouleaux 11 à 14 à illuminer ne peuvent en pratique être disposés bout à bout en une sorte de tore coupé par ce plan au niveau des génératrices 12, mais qu'ils doivent être montés en cascade avec leurs axes (ou génératrices 12) parallèles et décalés sur le trajet unique 5 des feuilles perpendiculaire aux génératrices 12, le faisceau de balayage ligne engendré par le bloc déflecteur 58 est capté successivement, dans quatre secteurs différents du plan radial considéré, par quatre miroirs fixes de renvoi 71, 72, 73 et 74. Ceux-ci fait sortir ce balayage de son plan et le renvoient selon les faisceaux 21 à 24, vers les quatre génératrices 12, disposées comme souhaité grâce au fait que l'orientation des miroirs 71 à 74 permet de réorienter les faisceaux 21 à 24 vers tout secteur voulu, en s'affranchissant ainsi de la position angulaire de ces miroirs 71 à 74 autour de l'axe 60.

Il peut aussi être prévu que le bloc 58 soit illuminé sous un angle déterminé quelconque et aussi que ses quatre faces 61-64 aient en outre des inclinaisons différentes sur l'axe de rotation 60. Les quatre rayons correspondants 21-24 successivement renvoyés ont alors des inclinaisons différentes sur l'axe 60, si bien que les quatre rouleaux respectifs (11) à axes orthogonaux à l'axe 60 peuvent s'échelonner côte à côte, le long de l'axe 60 avec des décalages axiaux spécifiques à chacun par rapport à l'axe 60, sans nécessité de miroirs de renvoi 71 à 74.

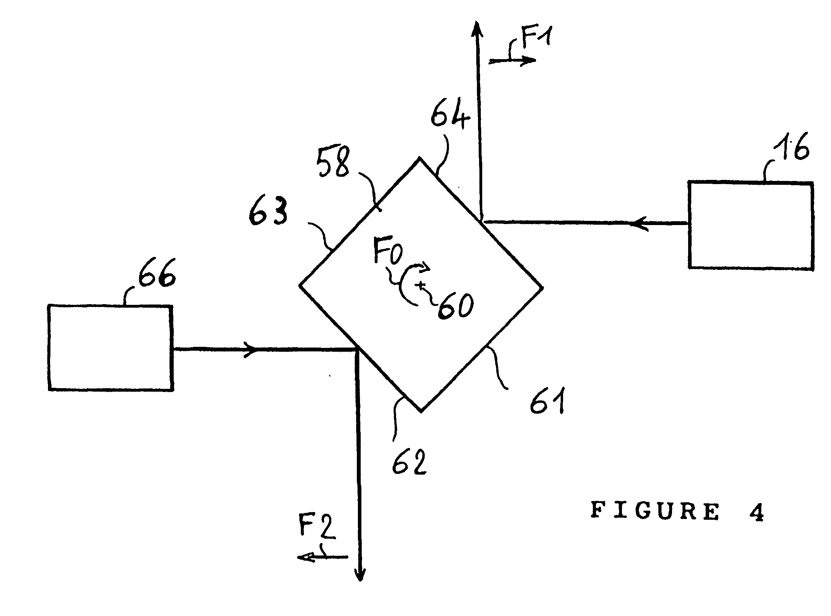

Dans le cas où l'on souhaite accroître les performances de vitesse de l'imprimante, il peut être prévu une seconde source laser, 66 (fig. 4) d'illumination du déflecteur 58 pour balayer un autre secteur. Cette seconde source peut être disposée, par exemple, à l'opposé de la source 16 par rapport à l'axe de rotation 60 ou elle émet simplement un faisceau incliné différemment sur cet axe 60, ce qui assure la séparation spatiale des balayages respectifs F1 et F2. Il y a ainsi deux pluralités d'ensembles d'impression, 1, 2 et 3, 4 par exemple, avec une source optique particulière à chaque pluralité.

## Revendications

1. Imprimante couleur comportant une pluralité d'ensembles d'impression (1, 2, 3, 4) d'une pluralité de couleurs, disposés en série dans une chaîne (5) d'impression d'un support d'impression et comportant, chacun, un tambour électrostatique d'impression (11) agencé pour fixer des pigments d'une couleur spécifique selon une image formée par balayage d'un faisceau optique (21-24) modulé par des données d'image (32) et transférée au support d'impression par une source de faisceau optique unique (16) commune à tous les ensembles d'impression (1-4), des moyens de commutation (18, 20 ; 44; 60) étant agencés pour commuter la source (16) sur les différents tambours (11), imprimante **caractérisée par le fait que** les moyens de commutation comprennent un miroir (20) de séparation spatiale du faisceau de la source (16) permettant de l'aiguiller successivement vers les ensembles d'impression (1-4).

2. Imprimante couleur selon la revendication 1, dans laquelle les moyens de commutation comportent un miroir rotatif (20) couplé à des moyens d'entraînement (19) agencés pour lui faire occuper successivement une pluralité de positions correspondant à la pluralité d'ensembles d'impression (1 - 4).

3. Imprimante couleur selon l'une des revendications 1 et 2, dans laquelle les moyens de commutation comportent un bloc (40) d'une pluralité de déflecteurs (41 - 44) couplé à des moyens d'entraînement agencés pour interposer successivement chacun des déflecteurs (41 - 44) sur le trajet d'un faisceau issu de la source (16).

4. Imprimante couleur selon la revendication 3, dans laquelle le bloc (40) est monté mobile en translation dans une direction sensiblement perpendiculaire à celle du faisceau issu de la source (16) et comporte une pluralité de miroirs (41 - 44) d'inclinaisons différentes.

5. Imprimante couleur selon l'une des revendications 1 à 4, dans laquelle il est prévu des moyens (31) de modulation de la largeur d'impulsions électriques commandant l'émission, par la source (16), d'impulsions optiques de pixel correspondantes.

6. Imprimante couleur selon la revendication 1 à 5, dans laquelle les ensembles d'impression (1 - 4) sont sensiblement disposés en arc de cercle autour des moyens de commutation (20).

7. Imprimante couleur selon l'une des revendication 1 à 6, dans laquelle les moyens de commutation comportent un dispositif (58) pour émettre simultanément la pluralité de faisceaux (21 - 24) d'ensembles d'impression (1 - 4) et il est prévu, sur le trajet de ceux-ci, une pluralité correspondante de moyens de contrôle de leurs intensités (51 - 54).

8. Imprimante selon la revendication 7, dans lequel la source optique (16) est commandée par les données d'une pluralité d'images successives et les moyens de contrôle d'intensités sont des obturateurs commandés successivement.

9. Imprimante selon la revendication 7, dans laquelle la source optique (16) est à émission permanente en cours d'impression et la pluralité de moyens de contrôle (51 - 54) est commandée simultanément par des données d'une pluralité correspondante de données d'images.

10. Imprimante couleur selon l'une des revendications 1 à 9, dans laquelle les moyens de commutation comportant un bloc rotatif (58) comportant au moins un miroir latéral (61 - 64) de balayage d'une pluralité de miroirs (71 - 74) de renvoi vers les tambours (11).

11. Imprimante selon la revendication 10, dans laquelle le bloc rotatif (58) comporte une pluralité de miroirs latéraux (61 - 64) d'inclinaisons spécifiques sur l'axe de rotation (60) du bloc (58).

12. Imprimante couleur selon l'une des revendications 1 à 11, comportant deux pluralités d'ensembles d'impression (1, 2; 3, 4) avec une source optique (16, 66) particulière à chaque pluralité.

## Claims

1. Colour printer comprising a series of printing units (1, 2, 3, 4) of a series of colours, arranged as a series in a printing chain (5) of a printing support and each one comprising an electrostatic printing drum (11) arranged to fix pigments of a specific colour according to an image formed by scanning from an electron beam (21-24) modulated by image data (32) and transferred to the printing support by a single electron beam source (16) common to all of the printing units (1-4), commutation means (18, 20; 44; 60) being arranged to commutate the source (16) to the different drums (11), the printer being **characterised by** the fact that the commutation means include a mirror (20) for spatial separation of the beam from the source (16) making it possible to switch it successively towards the printing units (1-4).

2. Colour printer in accordance with claim 1, in which the commutation means comprise a rotating mirror (20) coupled to drive means (19) arranged to make it successively occupy a series of positions corresponding to the series of printing units (1 - 4).

3. Colour printer in accordance with either of the claims 1 and 2, in which the commutation means comprise a block (40) of a series of deflectors (41 - 44) coupled to drive devices arranged to interpose successively each of the deflectors (41 - 44) over the path of a beam originating from the source (16).

4. Colour printer in accordance with claim 3, in which the block (40) is mounted mobile in translation in a direction perceptibly perpendicular to that of the beam originating from the source (16) and comprises a series of mirrors (41 - 44) differently inclined.

5. Colour printer in accordance with any of the claims 1 to 4 , in which are provided means (31) for modulating the width of electric impulses controlling the emission, via the source (16), of corresponding pixel optical impulses.

6. Colour printer in accordance with claims 1 to 5, in which the printing units (1 - 5) are perceptibly arranged along the arc of a circle around the commutation means (20).

7. Colour printer in accordance with any of the claims 1 to 6, in which the commutation means comprise an appliance (58) to simultaneously emit the series of beams (21 - 24) of printing units (1 - 4) and along the path of these, a corresponding series of means are provided to control their intensities (51 - 54).

8. Printer in accordance with claim 7, in which the optic source (16) is controlled by the data from a number of successive images and the intensity control means are obturators controlled successively.

9. Printer in accordance with claim 7, in which the optical source (16) is permanently emitting during printing and the number of control meanss (51 - 54) is controlled simultaneously by data from a corresponding series of image data.

10. Colour printer in accordance with any of the claims 1 to 9, in which the commutation means comprise a rotating block (58) comprising at least one lateral mirror (61 - 64) to scan a series of mirrors (71 - 74) reflecting back towards the drums (11).

11. Printer in accordance with claim 10, in which the rotating block (58) comprises a series of lateral mirrors (61 - 64) with specific inclinations on the axis of rotation (60) of the block (58).

12. Colour printer in accordance with any of the claims 1 to 11, comprising two series of printing units (1, 2: 3, 4) with an optical source (16, 66) particular to each series.

## Patentansprüche

1. Farbdrucker, beinhaltend mehrere Druckbaugruppen (1, 2, 3, 4) mehrerer Farben, welche in Serie in einer Druckkette (5) eines Druckträgers angeordnet sind und jeweils eine elektrostatische Drucktrommel (11) beinhalten, welche dafür ausgelegt ist, Pigmente einer bestimmten Farbe gemäß einem Bild zu fixieren, das durch Abtasten eines durch Bilddaten (32) modulierten optischen Strahlenbündels (21-24) gebildet und mit einer einzigen, allen Druckbaugruppen (1-4) gemeinsamen optischen Strahlenquelle (16) auf den Druckträger transferiert wird, wobei Umschaltmittel (18, 20; 44; 60) zum Umschalten der Quelle (16) auf die verschiedenen Trommeln (11) ausgelegt sind und der Drucker durch die Tatsache **gekennzeichnet ist**, dass die Umschaltmittel einen Spiegel (20) zur räumlichen Trennung des Strahlenbündels der Quelle (16) enthalten, was es gestattet, dieses sukzessiv auf eine der Druckbaugruppen (1-4) zu lenken.

2. Farbdrucker gemäß Anspruch 1, in welchem die Umschaltmittel einen drehbaren Spiegel (20) enthalten, der mit Antriebsmitteln (19) gekoppelt ist, die dafür ausgelegt sind, ihn sukzessiv mehrere den Druckbaugruppen entsprechende Positionen einnehmen zu lassen.

3. Farbdrucker gemäß einem der Ansprüche 1 und 2, in welchem die Umschaltmittel einen Block (4) aus mehreren Deflektoren (41-44) beinhalten, die mit Antriebsmitteln gekoppelt sind, welche dafür ausgelegt sind, sukzessiv jeden der Deflektoren (41-44) in den Strahlengang eines von der Quelle (16) ausgesandten Strahlenbündels einzufügen.

4. Farbdrucker gemäß Anspruch 3, in welchem der Block (40) translatorisch in einer Richtung beweglich montiert ist, die ungefähr senkrecht zu derjenigen des von der Quelle (16) ausgesandten Strahlenbündels liegt und mehrere Spiegel (41-44) unterschiedlicher Neigungen beinhaltet.

5. Farbdrucker gemäß einem der Ansprüche 1 bis 4, in welchem Mittel (31) zur Modulation der Breite elektrischer Impulse vorgesehen sind, welche die Aussendung optischer Impulse zugeordneter Pixel durch die Quelle (16) steuern.

6. Farbdrucker gemäß einem der Ansprüche 1 bis 5, in welchem die Druckbaugruppen (1-4) ungefähr auf einem Kreisbogen um die Umschaltmittel (20) herum angeordnet sind.

7. Farbdrucker gemäß einem der Ansprüche 1 bis 6, in welchem die Umschaltmittel eine Vorrichtung (58) zum simultanen Aussenden der Strahlenbündel (21-24) der Druckbaugruppen (1-4) beinhalten und in welchem in deren Strahlengang mehrere zugehörige Mittel zur Kontrolle ihrer Intensität (51-54) vorgesehen sind.

8. Farbdrucker gemäß Anspruch 7, in welchem die optische Quelle (16) von den Daten mehrerer sukzessiver Bilder gesteuert wird und die Mittel zur Kontrolle der Intensität sukzessiv angesteuerte Verschlüsse sind.

9. Farbdrucker gemäß Anspruch 7, in welchem die optische Quelle (16) beim Drucken ständig Strahlen aussendet und die Kontrollmittel (51-54) simultan von Daten mehrerer zugehöriger Bilddaten gesteuert werden.

10. Farbdrucker gemäß einem der Ansprüche 1 bis 9, in welchem die Umschaltmittel einen drehbaren Block (58) beinhalten, welcher mindestens einen seitlichen Spiegel (61-64) zum Abtasten mehrerer Spiegel (71-74) für die Reflexion zu den Trommeln (11) beinhaltet.

11. Farbdrucker gemäß einem der Ansprüche 1 bis 10, in welchem der drehbare Block (58) mehrere seitliche Spiegel (61-64) mit bestimmten Neigungen auf der Drehachse (60) des Blockes (58) beinhaltet.

12. Farbdrucker gemäß einem der Ansprüche 1 bis 11, beinhaltend zwei Mengen von Druckbaugruppen (1, 2; 3, 4) mit je einer zu einer Menge gehörenden optischen Quelle (16, 66).
